# FASCICULE DE BREVET EUROPEEN

(11) **EP 1 609 700 B1**
(45) Date de publication et mention de la délivrance du brevet: **13.02.2008**
(21) Numéro de dépôt: 05291331.6
(22) Date de dépôt: 21.06.2005
(51) Int. Cl.: B62D 25/14, B62D 29/00

(54) **Traverse de planche de bord**
Instrumententräger
Dashboard supporting beam

(30) Priorité: 25.06.2004 FR 0407023
(43) Date de publication de la demande: 28.12.2005
(73) Titulaire: Faurecia Interieur Industrie, 92000 Nanterre (FR)
(72) Inventeur: Baudouin, Ivan, 93600 Aulnay sous Bois (FR)
(74) Mandataire: Habasque, Etienne J. Jean-François

(56) Documents cités:
- EP-A- 1 298 035
- DE-A- 10 232 390
- DE-U- 29 916 470
- US-A1- 2001 043 835
- US-A1- 2002 030 386
- US-A1- 2002 145 309
- US-A1- 2004 090 088
- PATENT ABSTRACTS OF JAPAN vol. 011, no. 316 (M-631), 15 octobre 1987 (1987-10-15) & JP 62 099206 A (TOYOTA MOTOR CORP), 8 mai 1987 (1987-05-08)

## Description

L'invention concerne une traverse de planche de bord pour véhicule à moteur et un procédé de fabrication d'une telle traverse de planche.

En particulier, l'invention concerne une traverse de planche de bord pour véhicule à moteur comprenant un élément structurel métallique tubulaire assemblé aux montants A du véhicule à moteur et au moins un conduit aéraulique destiné à transporter de l'air vers l'habitacle du véhicule à moteur et disposé au moins partiellement dans l'élément structurel métallique.

Une telle traverse à pour avantage de localiser de façon concentrique l'élément métallique de structure du véhicule et les conduits aérauliques en profitant du caractère tubulaire de l'élément métallique de structure. Il en résulte un gain de volume par rapport à la structure plus classique dans laquelle l'élément structurel est disposé sensiblement parallèlement mais non concentriquement avec les conduits aérauliques.

Pour des raisons de déperditions calorifiques induites par les caractéristiques de bon conducteur thermique de l'acier, il est nécessaire que l'air transporté ne soit pas au contact direct de l'élément structurel métallique tubulaire, sans quoi le groupe de chauffage/refroidissement d'air embarqué devra être surdimensionné pour prendre en compte lesdites déperditions. Il est donc connu de réaliser le conduit aéraulique en matière plastique permettant d'isoler l'air transporté de l'acier de la traverse.

US6422633 ou DE10046120 divulguent des traverses de planche de bord pour véhicule à moteur comprenant un élément structurel métallique tubulaire assemblé aux montants A du véhicule à moteur et au moins un conduit aéraulique en matière plastique destiné à transporter de l'air vers l'habitacle du véhicule à moteur et disposé au moins partiellement dans l'élément structurel métallique. Les procédés de fabrication envisagés dans ces documents reposent sur des technologies hybrides dans lesquels la structure métallique est surmoulée par des éléments de matière plastique constituant notamment les conduits aérauliques. Les éléments plastiques ont en outre une fonction de renfort et participe en partie à la fonction de structure de la traverse. De tels procédés ont pour avantage de réduire le nombre d'étapes de procédé et/ou le nombre de produits intermédiaires dans le cycle de production. Cependant la contrepartie de ce gain est une phase de développement de la traverse aéraulique et des outillages associés plus complexe, ainsi que des coûts de fabrication et d'exploitation des outillages associés très supérieurs à ce qui est classiquement envisagé dans la réalisation d'une traverse avec conduits aérauliques parallèles.

Un autre exemple de la technique antérieure est divulgué par le document DE 29 916470U

L'un des buts de la présente invention est de proposé un procédé de fabrication d'une traverse structurelle avec conduit aéraulique en matériau plastique concentrique permettant d'avoir des coûts de développement et d'outillages comparables avec les coûts de développement et d'outillages de structures plus classiques dans lesquelles l'élément structurel métallique est disposé sensiblement parallèlement mais non concentriquement avec les conduits aérauliques en plastique, tout en conservant les avantages volumiques de la structure concentrique.

A cet effet, l'invention concerne un procédé de fabrication d'une traverse de planche de bord pour véhicule à moteur comprenant un élément structurel métallique tubulaire assemblé aux montants A du véhicule à moteur et au moins un conduit aéraulique en matière plastique destiné à transporter de l'air vers l'habitacle du véhicule à moteur et disposé au moins partiellement dans l'élément structurel métallique.

Selon l'invention le procédé comprend les étapes suivantes :
- fabrication d'une demi-coquille métallique inférieure et d'une demi-coquille métallique supérieure complémentaire de la demi-coquille métallique inférieure destinées à former, une fois assemblées, l'élément structurel métallique tubulaire;
- assemblage de moyens de fixation de l'élément structurel métallique tubulaire avec les montants A aux extrémités libres de la demi-coquille métallique inférieure;
- fabrication du conduit aéraulique en matière plastique; et séquentiellement
- positionnement d'au moins un tronçon du conduit aéraulique sur la demi-coquille inférieure ; puis
- assemblage de la demi-coquille supérieure sur la demi-coquille inférieure, le tronçon du conduit aéraulique étant enfermé entre les deux demi-coquilles.

Le procédé selon l'invention prend le contre-pied des enseignements de US6422633 ou DE10046120, en procédant d'une part à la fabrication des éléments de structure métallique, d'autre part à la fabrication des éléments de conduit aéraulique, et à une ultime étape d'assemblage des différents éléments préalablement fabriqués

Selon un mode de réalisation de l'étape d'assemblage des deux demi-coquilles, la demi-coquille supérieure est collée sur la demi-coquille inférieure.

Selon un autre mode de réalisation de l'étape d'assemblage des deux demi-coquilles, la demi-coquille supérieure est soudée sur la demi-coquille inférieure.

Selon un mode de réalisation de l'étape de fabrication du conduit aéraulique, le conduit aéraulique en matière plastique est fabriqué par un procédé d'extrusion/soufflage.

Selon mode de réalisation de l'étape de fabrication du conduit aéraulique, le conduit aéraulique en matière plastique est fabriqué par un procédé d'injection en une étape dans lequel
- on injecte de la matière plastique dans un moule comprenant une cavité de moulage définissant deux demi-coques reliée entre elle par un film charnière
- on démoule les deux demi-coques reliées par le film charnière
- on assemble les deux demi-coques en plastique par rotation relative des deux demi-coques autour d'un axe passant par le film charnière, réalisant ainsi le conduit aéraulique en matière plastique.

Afin d'assurer une cohésion entre l'élément structurel métallique et le conduit aéraulique, selon une caractéristique de l'invention, au moins dans une direction transversale, le tronçon de conduit aéraulique destiné à être disposé dans l'élément de structure métallique comprend, avant assemblage des demi-coquilles métallique, au moins une partie présentant une dimension extérieure supérieure à la dimension intérieure de l'élément de structure métallique en regard, de telle sorte que lors de l'étape d'assemblage des deux demi-coquilles métalliques, cette partie est mise en compression élastique selon la direction transversale par les parties des deux demi-coquilles métalliques assemblées.

Selon une caractéristique optionnelle de l'invention pour assurer un bon positionnement relatif des éléments à assembler, l'élément de structure métallique et le tronçon de conduit aéraulique destiné à être disposé dans l'élément de structure métallique comprennent des moyens d'indexation complémentaires permettant le positionnement longitudinal et/ou transversal et/ou angulaire du conduit aéraulique par rapport à la demi-coquille métallique inférieure et/ou l'élément de structure métallique.

L'invention concerne aussi une traverse de planche de bord pour véhicule à moteur comprenant un élément structurel métallique tubulaire assemblé aux montants A du véhicule à moteur et au moins un conduit aéraulique en matière plastique destiné à transporter de l'air vers l'habitacle du véhicule à moteur et ayant au moins un tronçon disposé dans l'élément structurel métallique. Selon l'invention :
l'élément structurel métallique comprend deux demi-coquilles métallique assemblée ensemble, et
le conduit aéraulique est indépendant des deux demi-coquilles et comprend au moins une partie du tronçon disposé dans l'élément structurel métallique ayant une contrainte élastique suivant au moins une direction transversale plaquée au moins en deux points opposés de la face interne de l'élément structurel métallique sous l'action de la force de réaction de la contrainte élastique.

Selon un mode de réalisation de la traverse selon l'invention la demi-coquille supérieure est collée sur la demi-coquille inférieure.

Selon un mode de réalisation de la traverse selon l'invention la demi-coquille supérieure est soudée sur la demi-coquille inférieure.

Selon un mode de réalisation de la traverse selon l'invention le conduit aéraulique en matière plastique un conduit extrudé/soufflé.

Selon un mode de réalisation de la traverse selon l'invention le conduit aéraulique en matière plastique comprend deux demi-coques en matière plastique reliées par un film charnière venant de moulage avec lesdites demi-coques.

Selon un mode de réalisation de la traverse selon l'invention l'élément de structure métallique et le tronçon de conduit aéraulique destinée à être disposée dans l'élément de structure métallique comprennent des moyens d'indexation complémentaires permettant le positionnement longitudinal et/ou transversal et/ou angulaire du conduit aéraulique par rapport à la demi-coquille métallique inférieure et/ou l'élément de structure métallique.

L'invention concerne enfin un véhicule à moteur comprenant une caisse structurelle ayant deux montants A et une traverse telle que décrite ci-dessus comprenant des moyens de fixations coopérant avec des moyens de fixation complémentaires disposés sur chaque montant A pour assembler la traverse à la caisse structurelle du véhicule entre les deux montants A.

L'invention sera mieux comprise à la lecture de la description qui va suivre, donnée uniquement à titre d'exemple et faite en se référant aux dessins annexés, dans lesquels :
- la Figure 1 est une vue schématique partielle d'un véhicule selon la présente invention;
- la Figure 2 est une vue schématique en coupe transversale selon la ligne II-II de la figure 1 ;
- la Figure 3 est une vue schématique en coupe transversale selon la ligne III-III de la figure 1 ;
- la Figure 4 est une vue schématique en coupe transversale d'un conduit aéraulique en plastique fabriqué par un procédé d'injection en une étape ;

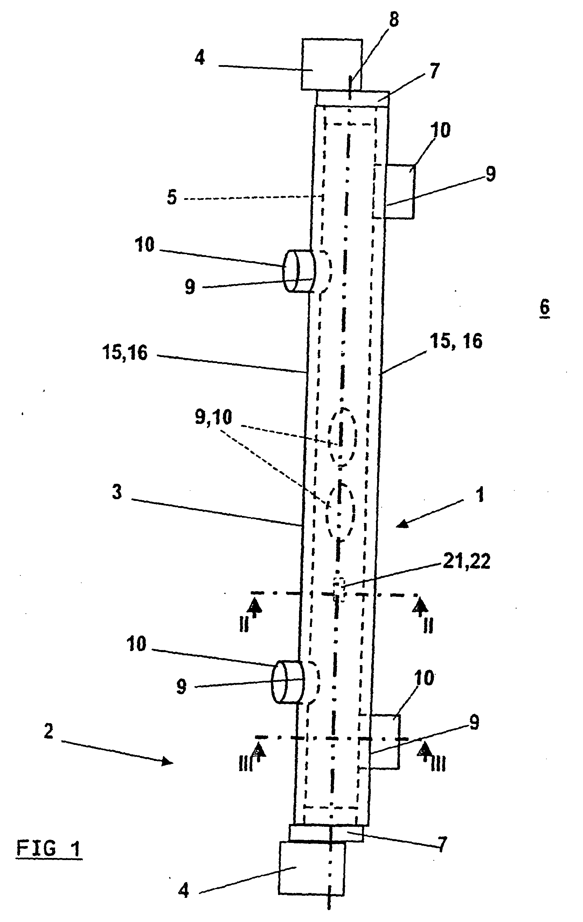

La figure 1 est une représentation schématique partielle d'un véhicule à moteur 2 présentant une traverse de planche de bord 1 comprenant un élément structurel métallique tubulaire 3 d'axe longitudinal 8 assemblé aux montants A 4 du véhicule à moteur 2 et au moins un conduit aéraulique 5 en matière plastique destiné à transporter de l'air vers l'habitacle 6 du véhicule à moteur 2 et disposé au moins partiellement longitudinalement dans l'élément structurel métallique tubulaire 3.

Dans la suite de la description, on entendra le terme "longitudinal" comme toute direction parallèle à l'axe 8 de l'élément structurel métallique tubulaire 3, et le terme "transversal" comme tout plan ou toute direction perpendiculaire à l'axe de l'élément structurel métallique tubulaire 3

La traverse de planche de bord 1 est relié aux montants A 4 par tous les moyens de fixation 7 connus pour rapporter une traverse sur les montants A d'un véhicule à moteur, on citera à titre d'exemple non limitatif les moyens de fixation proposés dans la demande de brevet français FR-A-2 841 864.

L'élément structurel métallique tubulaire 3 présente au moins une ouverture transversale 9 destinée à laisser passer un tronçon de sortie transversale 10 du conduit aéraulique 5. Cette sortie transversale 10 peut être connectée à un dispositif de diffusion d'air non représenté permettant de contrôler la direction et/ou le débit du flux d'air en entrée ou en sortie de conduit aéraulique. Ce dispositif peut être par exemple un aérateur permettant la diffusion de l'air transporté par le conduit aéraulique 5 dans l'habitacle 6, ou un groupe de climatisation d'air débitant un flux d'air dans le conduit aéraulique 5.

L'élément structurel métallique tubulaire 3 selon l'invention comprend une demi-coquille inférieure 11 et une demi-coquille supérieure 12 assemblées ensemble le long de leur bords libres longitudinaux 15, 16. Les moyens de fixation 7 de la traverse 1 sur les montants A 4 sont assemblés aux extrémités transversales de l'une ou l'autre des demi-coquilles 11,12. Par ailleurs de façon optionnelle, il peut être rapporté sur l'élément structurel métallique 3 une jambe de force métallique (non représentée) assurant une liaison rigide entre la traverse 1 et le plancher du véhicule 2 et/ou une liaison de traverse de baie inférieure métallique assurant une liaison rigide entre la traverse de planche de bord 1 et la traverse de baie inférieure (non représentée) du véhicule 2. Le matériau métallique constitutif des demi-coquilles 11,12, les dimensions de chaque demi-coquille 11,12, et le procédé d'assemblage des deux demi-coquilles 11,12 entre elles, et, des moyens de fixation 7 et des éventuelles jambe de force métallique et liaison de traverse de baie inférieure métallique avec la traverse 1 sont dimensionnés pour obtenir un ensemble structurel métallique répondant au cahier des charges structurel de la traverse de planche de bord 1. Cela veut dire qu'à eux seuls, les éléments métalliques assemblés, ci-dessus répertoriés, ont un comportement mécanique permettant de tenir notamment les valeurs de tenue en effort en cas de crash, et de tenue vibratoire imposées par le cahier des charges d'un tableau de bord pourvu de ses équipements (air bags, colonne de direction, combiné, HVAC, etc.) monté entre les montants A d'un véhicule à moteur.

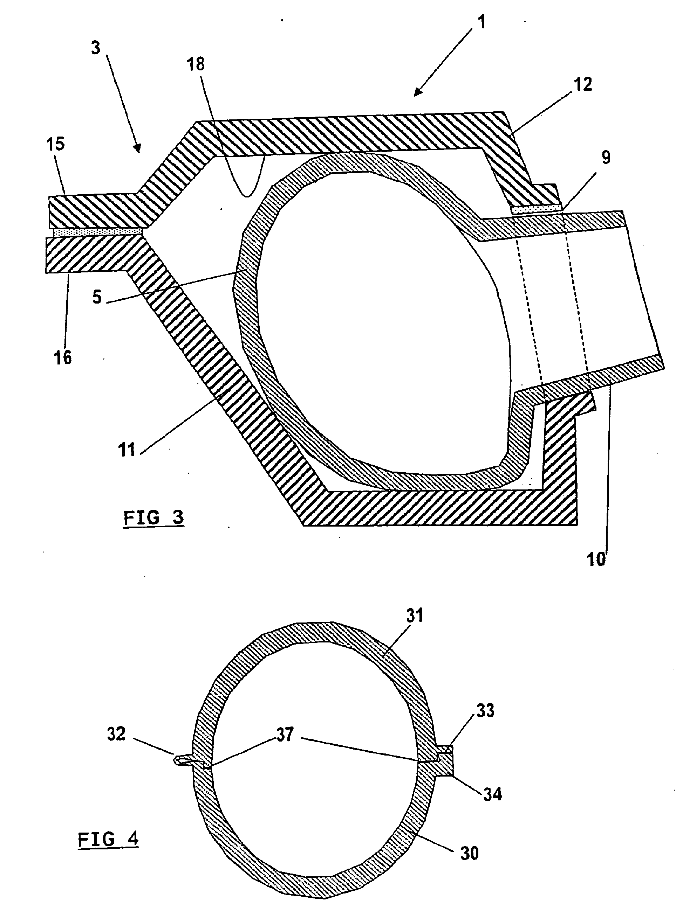

Les bords libres longitudinaux des deux demi-coquilles 11,12 sont, bien entendu, optimisés en fonction de la position des ouvertures transversales 9. Sur la représentation de la figure 3, le périmètre de l'ouverture transversale 9 comprend une partie appartenant à la demi-coquille supérieure 12 et une partie appartenant à la demi-coquille inférieure 11.

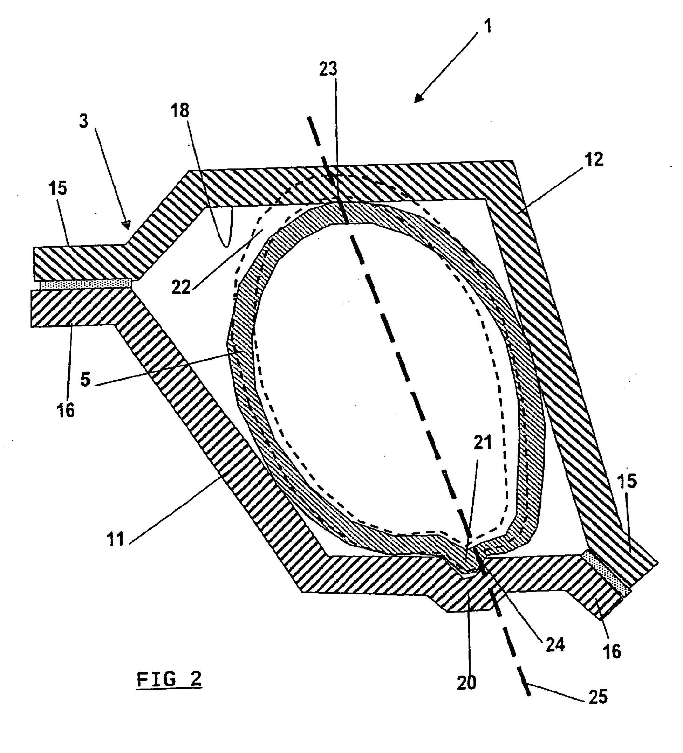

Les procédés d'assemblage des deux demi-coquilles 11,12 peuvent être par exemple, un collage métal/métal (tel que représenté sur les figures 2 et 3)ou un soudage.

Le conduit aéraulique 5 est en matériau plastique, et comprend au moins un tronçon longitudinal 5 disposé entre les deux demi-coquilles 11,12. Un procédé de fabrication d'un tel conduit aéraulique 5 peut être, par exemple, un procédé d'extrusion soufflage connu par ailleurs.

Un autre procédé de fabrication d'un tel conduit aéraulique comprend les étapes suivantes :
on injecte de la matière plastique dans un moule comprenant une cavité de moulage définissant deux demi-coques 30, 31 reliée entre elle par un film charnière 32
on démoule les deux demi-coques 30, 31 reliées par le film charnière 32
on assemble les deux demi-coques en plastique 30, 31 par rotation relative des deux demi-coques 30,31 autour d'un axe passant par le film charnière 32, et en solidarisant ensemble le bord libre longitudinal 33, 34 des demi-coques 30, 31 réalisant ainsi le conduit aéraulique 5 en matière plastique. La figure 4 représente schématiquement en coupe transversale d'un conduit aéraulique 5 fabriqué selon ce procédé. Avantageusement, pour assurer une bonne étanchéité à l'air du conduit aéraulique ainsi réalisé, les bords longitudinaux peuvent présentés des profils en escalier complémentaires créant une chicane d'étanchéité 37.

Pour positionner de façon adéquate le conduite aéraulique entre les deux demi-coquilles 11,12, l'élément de structure métallique 3 et le tronçon de conduit aéraulique 5 destinée à être disposée dans l'élément de structure métallique 3 comprennent des moyens d'indexation complémentaires 9,10 ; 20, 21 permettant le positionnement longitudinal et/ou transversal et/ou angulaire le conduit aéraulique 5 par rapport à la demi-coquille métallique inférieure 11 et/ou la demi-coquille métallique supérieure 12. On entend par positionnement angulaire, le positionnement relatif angulaire du conduit 5 et de l'élément de structure 3 autour de l'axe longitudinal 8 de l'élément de structure 3.

Les moyens d'indexation représentés sur les figures 1 et 2 comprennent un élément de gorge 20 prévu dans la demi-coquille inférieure 11 coopérant avec un bossage 21 réalisé sur le conduit aéraulique 5. Dans le cas du conduit aéraulique 5 fabriqué par injection en une étape (voir figure 4), la charnière film 32 ou les bords libres 33, 34 peuvent constituer des bossages.

En outre, comme représentés sur la figure 3 une ouverture transversale 9 de l'élément de structure 3 et le tronçon de sortie transversale 10 associé du conduit aéraulique 5 constituent ensemble des moyens d'indexation.

Selon une autre caractéristique de l'invention, le conduit aéraulique 5 avant assemblage avec les demi-coquilles présente dans au moins une direction transversale 25 une dimension extérieure supérieure à la dimension intérieure correspondante des deux demi-coquilles 11,12 assemblées. Cela est illustré par la figure 2 dans laquelle est représenté en traits interrompus une coupe transversale 22 du conduit aéraulique 5 tel qu'il est en sortie de fabrication. Lors de l'étape d'assemblage des deux demi-coquilles 11, 12, le tronçon de conduit aéraulique en plastique 5 disposé entre les demi-coquilles 11, 12 subit une déformation ou une contrainte élastique du fait du rapprochement des deux demi-coquilles 11, 12, générant en retour une force de réaction plaquant au moins deux points 23, 24 opposés du conduit aéraulique 5 contre les parois internes en regard des deux demi-coquilles 11, 12. Ainsi seule ou en combinaison avec les moyens d'indexage, la mise en contrainte du conduit aéraulique 5 lors de l'étape d'assemblage des deux demi-coquilles 11, 12, assure un isostatisme du conduit aéraulique en plastique 5 dans l'élément de structure métallique 3 sans mettre en oeuvre un procédé spécifique de solidarisation de type surmoulage ou autre.

Le procédé de fabrication d'une telle traverse de planche de bord 1 comprend les étapes de
- fabrication de la demi-coquille métallique inférieure 11 et de la demi-coquille métallique supérieure 12 complémentaire de la demi-coquille métallique inférieure 11 formant une fois assemblées, l'élément structurel métallique tubulaire 3 ;
- assemblage des moyens de fixation 7 de l'élément structurel métallique tubulaire 3 avec les montants A 4 aux extrémités libres de la demi-coquille métallique inférieure 11 ou supérieure 12;
- fabrication du conduit aéraulique 5 en matière plastique; et séquentiellement
- positionnement longitudinal d'au moins un tronçon du conduit aéraulique 5 sur une des demi-coquilles 11, 12 ; puis
- assemblage de la demi-coquille supérieure 12 sur la demi-coquille inférieure 11, le tronçon du conduit aéraulique 5 étant enfermé entre les deux demi-coquilles 11, 12.

## Revendications

1. Procédé de fabrication d'une traverse de planche de bord (1) pour véhicule à moteur (2) comprenant un élément structurel métallique tubulaire (3) assemblé aux montants A (4) du véhicule à moteur (2) et au moins un conduit aéraulique (5) en matière plastique destiné à transporter de l'air vers l'habitacle (6) du véhicule à moteur (2) et disposé au moins partiellement dans l'élément structurel métallique (3) comprenant les étapes suivantes :
- fabrication d'une demi-coquille métallique inférieure (11) et d'une demi-coquille métallique supérieure (12) complémentaire de la demi-coquille métallique inférieure (11), destinées à former, une fois assemblées, l'élément structurel métallique tubulaire (3);
- assemblage, aux extrémités libres transversales de l'une ou l'autre des demi-coquilles métalliques (11, 12), de moyens de fixation (7) de l'élément structurel métallique tubulaire (3) avec les montants A (4);
- fabrication du conduit aéraulique (5) en matière plastique; et séquentiellement
- positionnement d'au moins un tronçon (5) du conduit aéraulique sur une demi-coquille (11, 12); puis
- assemblage de la demi-coquille supérieure (12) sur la demi-coquille inférieure (11), le tronçon (5) du conduit aéraulique étant enfermé entre les deux demi-coquilles (11, 12),
**caractérisé en ce que** au moins dans une direction transversale (25), le tronçon de conduit aéraulique (5) destiné à être disposé dans l'élément de structure métallique (3) comprend, avant assemblage des demi-coquilles métallique (11, 12), au moins une partie présentant une dimension extérieure supérieure à la dimension intérieure de la partie d'élément de structure métallique (3) en regard une fois l'assemblage des demi-coquilles (11,12) effectué, de telle sorte que lors de l'assemblage des deux demi-coquilles métallique (11, 12), cette partie de tronçon (5) est mise en compression élastique selon la direction transversale (25).

2. Procédé de fabrication d'une traverse de planche de bord selon la revendication 1 **caractérisé en ce que** la demi-coquille supérieure (12) est collée sur la demi-coquille inférieure (11).

3. Procédé de fabrication d'une traverse de planche de bord selon la revendication 1 **caractérisé en ce que** la demi-coquille supérieure (12) est soudée sur la demi-coquille inférieure (11).

4. Procédé de fabrication d'une traverse de planche de bord selon l'une quelconque des revendications 1 à 3 **caractérisé en ce que** le conduit aéraulique (5) en matière plastique est fabriqué par un procédé d'extrusion/soufflage.

5. Procédé de fabrication d'une traverse de planche de bord selon l'une quelconque des revendications 1 à 3 **caractérisé en ce que** le conduit aéraulique (5) en matière plastique est fabriqué par un procédé d'injection en une étape dans lequel
- on injecte de la matière plastique dans un moule comprenant une cavité de moulage définissant deux demi-coques (30, 31) reliée entre elle par un film charnière (32)
- on démoule les deux demi-coques (30, 31)reliées par le film charnière (32)
- on assemble les deux demi-coques (30, 31) en plastique par rotation relative des deux demi-coques (30, 31) autour d'un axe passant par le film charnière (32), réalisant ainsi le conduit aéraulique (5) en matière plastique.

6. Procédé de fabrication d'une traverse de planche de bord selon l'une quelconque des revendications 1 à 5 **caractérisé en ce que** l'élément de structure métallique (3) et le tronçon de conduit aéraulique (5) destiné à être disposé dans l'élément de structure métallique (3) comprennent des moyens d'indexation (20, 21; 9, 10) complémentaires permettant le positionnement longitudinal et/ou transversal et/ou angulaire du conduit aéraulique par rapport à l'une des demi-coquilles métalliques (11, 12) et/ou l'élément de structure métallique (3).

7. Traverse de planche de bord pour véhicule à moteur (2) comprenant un élément structurel métallique tubulaire (3) assemblé aux montants A (4) du véhicule à moteur (2) et au moins un conduit aéraulique (5) en matière plastique destiné à transporter de l'air vers l'habitacle (6) du véhicule à moteur (2) et ayant au moins un tronçon (5) disposé dans l'élément structurel métallique (3) et l'élément structurel métallique (3) comprant deux demi-coquilles métalliques (11, 12) assemblées ensemble, **caractérisée en ce que**
- le conduit aéraulique (5) est indépendant des deux demi-coquilles (11, 12) et comprend au moins une partie du tronçon (5) disposé dans l'élément structurel métallique (3) subissant une contrainte élastique suivant au moins une direction transversale (25), et plaquée au moins en deux points opposés (23, 24) de la face interne (18) de l'élément structurel (3) sous l'action de la force de réaction de ladite contrainte élastique.

8. Traverse de planche de bord pour véhicule à moteur selon la revendication 7 **caractérisée en ce que** la demi-coquille supérieure (12) est collée sur la demi-coquille inférieure (11).

9. Traverse de planche de bord pour véhicule à moteur selon la revendication 7 **caractérisée en ce que** la demi-coquille supérieure (12) est soudée sur la demi-coquille inférieure (11).

10. Traverse de planche de bord pour véhicule à moteur selon l'une quelconque des revendications 7 à 9 **caractérisée en ce que** le conduit aéraulique (5) en matière plastique un conduit extrudé/soufflé.

11. Traverse de planche de bord pour véhicule à moteur selon l'une quelconque des revendications 7 à 9 **caractérisée en ce que** le conduit aéraulique (5) en matière plastique comprend deux demi-coques (30,31) en matière plastique reliées par un film charnière (32) venant de moulage avec lesdites demi-coques (30,31).

12. Traverse de planche de bord pour véhicule à moteur selon l'une quelconque des revendications 7 à 9 **caractérisée en ce que** l'élément de structure métallique (3) et le tronçon de conduit aéraulique (5) destiné à être disposé dans l'élément de structure métallique (3) comprennent des moyens d'indexation complémentaires (20,21; 9,10) permettant le positionnement longitudinal et/ou transversal et/ou angulaire du conduit aéraulique (5) par rapport à l'une des demi-coquilles métallique (11,12) et/ou l'élément de structure métallique (3).

13. véhicule à moteur comprenant une caisse structurelle ayant deux montants A (4) et une traverse de planche de bord (1) pour véhicule à moteur selon l'une quelconque des revendications 7 à 12 comprenant des moyens de fixations (7) coopérant avec des moyens de fixation complémentaires disposés sur chaque montant A (4) pour assembler la traverse (1) à la caisse structurelle du véhicule entre les deux montants A (4).

## Claims

1. Method for producing a dashboard cross-member (1) for a motor vehicle (2), comprising a tubular metal structural element (3) which is assembled with respect to the A pillars (4) of the motor vehicle (2) and at least one ventilation duct (5) which is constructed from plastics material and which is intended to convey air towards the passenger space (6) of the motor vehicle (2) and which is arranged at least partially in the metal structural element (3) comprising the following steps:
- producing a lower metal half-shell (11) and an upper metal half-shell (12) which complements the lower metal half-shell (11), which half-shells are intended to form, once assembled, the tubular metal structural element (3);
- assembling, at the free transverse ends of one or other of the metal half-shells (11, 12), means (7) for fixing the tubular metal structural element (3) with respect to the A pillars (4);
- producing the ventilation duct (5) of plastics material; and, sequentially,
- positioning at least a portion (5) of the ventilation duct on a half-shell (11, 12); then
- assembling the upper half-shell (12) on the lower half-shell (11), the portion (5) of the ventilation duct being enclosed between the two half-shells (11, 12), **characterised in that**, at least in a transverse direction (25), the ventilation duct portion (5) which is intended to be arranged in the metal structural element (3) comprises, before the metal half-shells (11, 12) are assembled, at least a part having an external dimension which is greater than the internal dimension of the facing metal structural element part (3) once the assembly of the half-shells (11, 12) has been carried out, in such a manner that, when the two metal half-shells (11, 12) are assembled, that part of the portion (5) is placed under resilient compression in the transverse direction (25).

2. Method for producing a dashboard cross-member according to claim 1, **characterised in that** the upper half-shell (12) is adhesively bonded to the lower half-shell (11).

3. Method for producing a dashboard cross-member according to claim 1, **characterised in that** the upper half-shell (12) is welded to the lower half-shell (11).

4. Method for producing a dashboard cross-member according to any one of claims 1 to 3, **characterised in that** the ventilation duct (5) of plastics material is produced by an extrusion/blow-moulding method.

5. Method for producing a dashboard cross-member according to any one of claims 1 to 3, **characterised in that** the ventilation duct (5) constructed from plastics material is produced by an injection moulding method in a step in which
- plastics material is injected into a mould comprising a mould cavity defining two half-shells (30, 31) which are connected to each other by a film-like hinge (32),
- the two half-shells (30, 31) which are connected by the film-like hinge (32) are removed from the mould,
- the two half-shells (30, 31) constructed from plastics material are assembled by the two half-shells (30, 31) being rotated in relation to each other about an axis which extends through the film-like hinge (32), thereby producing the ventilation duct (5) constructed from plastics material.

6. Method for producing a dashboard cross-member according to any one of claims 1 to 5, **characterised in that** the metal structural element (3) and the ventilation duct portion (5) which is intended to be arranged in the metal structural element (3) comprise complementary indexing means (20, 21; 9, 10) which allow longitudinal and/or transverse and/or angular positioning of the ventilation duct relative to one of the metal half-shells (11, 12) and/or the metal structural element (3).

7. Dashboard cross-member for a motor vehicle (2), comprising a tubular metal structural element (3) which is assembled with respect to the A pillars (4) of the motor vehicle (2) and at least one ventilation duct (5) which is constructed from plastics material and which is intended to convey air towards the passenger space (6) of the motor vehicle (2), and having at least a portion (5) arranged in the metal structural element (3) and the metal structural element (3) comprising two metal half-shells (11, 12) which are assembled together, **characterised in that**
- the ventilation duct (5) is independent of the two half-shells (11, 12) and comprises at least part of the portion (5) that is arranged in the metal structural element (3) which is resiliently loaded in at least one transverse direction (25), and which is pressed at least at two opposite locations (23, 24) of the inner face (18) of the structural element (3) under the action of the reaction force of that resilient loading.

8. Dashboard cross-member for a motor vehicle according to claim 7, **characterised in that** the upper half-shell (12) is adhesively bonded to the lower half-shell (11).

9. Dashboard cross-member for a motor vehicle according to claim 7, **characterised in that** the upper half-shell (12) is welded to the lower half-shell (11).

10. Dashboard cross-member for a motor vehicle according to any one of claims 7 to 9, **characterised in that** the ventilation duct (5) constructed from plastics material is an extruded/blow-moulded duct.

11. Dashboard cross-member for a motor vehicle according to any one of claims 7 to 9, **characterised in that** the ventilation duct (5) constructed from plastics material comprises two half-shells (30, 31) which are constructed from plastics material and which are connected by a film-like hinge (32) which is integrally moulded with those half-shells (30, 31).

12. Dashboard cross-member for a motor vehicle according to any one of claims 7 to 9, **characterised in that** the metal structural element (3) and the ventilation duct portion (5) which is intended to be arranged in the metal structural element (3) comprise complementary indexing means (20, 21; 9, 10) which allow longitudinal and/or transverse and/or angular positioning of the ventilation duct (5) relative to one of the metal half-shells (11, 12) and/or the metal structural element (3).

13. Motor vehicle comprising a structural body having two A pillars (4) and a dashboard cross-member (1) for a motor vehicle according to any one of claims 7 to 12, comprising fixing means (7) which cooperate with complementary fixing means which are arranged on each A pillar (4) in order to assemble the cross-member (1) with respect to the structural body of the vehicle between the two A pillars (4).

## Patentansprüche

1. Verfahren zur Herstellung eines Querträgers eines Armaturenbretts (1) für ein Kraftfahrzeug (2), mit einem metallischen rohrförmigen Strukturelement (3), das an den A-Säulen (4) des Kraftfahrzeugs (2) angebracht ist, und zumindest einem Luftkanal (5) aus Kunststoff zum Leiten von Luft in den Fahrgastraum (6) des Kraftfahrzeugs (2), welcher Luftkanal (5) zumindest teilweise in dem metallischen Strukturelement (3) angeordnet ist, welches Verfahren die folgenden Schritte umfaßt:
- Herstellung einer unteren metallischen Halbschale (11) und einer zu der unteren metallischen Halbschale (11) komplementären oberen metallischen Halbschale (12), welche dazu vorgesehen sind, im zusammengesetzten Zustand das metallische rohrförmige Strukturelement (3) zu bilden;
- Anbringung von Mitteln (7) zur Verbindung des metallischen rohrförmigen Strukturelements (30) mit den A-Säulen (4) an den freien äußeren Querenden der einen oder der anderen der metallischen Halbschalen (11,12);
- Herstellung des Luftkanals (5) aus Kunststoff; und anschließend
- Anordnung zumindest eines Abschnitts (5) des Luftkanals auf einer Halbschale (11,12); und anschließend
- Zusammenbau der oberen Halbschale (12) mit der unteren Halbschale (11), wobei der Abschnitt (5) des Luftkanals zwischen den zwei Halbschalen (11,12) eingeschlossen ist,
**dadurch gekennzeichnet, dass** der Abschnitt des Luftkanals (5), der zur Anordnung in dem metallischen Strukturelement (3) vorgesehen ist, vor dem Zusammenbau der metallischen Halbschalen (11,12) zumindest in einer Querrichtung (25) mindestens einen Teil aufweist, dessen äußere Abmessung größer ist als die innere Abmessung des Teils des metallischen Strukturelements (3) im zusammengesetzten Zustand der Halbschalen (1 1,12), derart, dass das durch den Zusammenbau der zwei metallischen Halbschalen (11,12) dieser Teil des Abschnitts (5) in dieser Querrichtung (25) unter elastischen Druck gesetzt wird.

2. Verfahren zur Herstellung eines Querträgers eines Armaturenbretts gemäß Anspruch 1, **dadurch gekennzeichnet, dass** die obere Halbschale (12) auf die untere Halbschale (11) aufgeklebt ist.

3. Verfahren zur Herstellung eines Querträgers eines Armaturenbretts gemäß Anspruch 1, **dadurch gekennzeichnet, dass** die obere Halbschale (12) mit der unteren Halbschale (11) verschweisst ist.

4. Verfahren zur Herstellung eines Querträgers eines Armaturenbretts gemäß einem der Ansprüche 1 bis 3, **dadurch gekennzeichnet, dass** der Luftkanal (5) aus Kunststoff durch Extrusion/Blasformen hergestellt ist.

5. Verfahren zur Herstellung eines Querträgers eines Armaturenbretts gemäß einem der Ansprüche 1 bis 3, **dadurch gekennzeichnet, dass** der Luftkanal (5) aus Kunststoff in einem Spritzvorgang hergestellt wird, mit einem Schritt, in welchem
- das Kunststoffmaterial in eine Form eingespritzt wird, die einen FormHohlraum umfaßt, der zwei Halbschalen (30,31) begrenzt, die miteinander durch ein Filmscharnier (32) verbunden sind;
- die zwei Halbschalen (30,31), die durch das Filmscharnier (32) verbunden sind, entnommen werden;
- die zwei Halbschalen (30,31) aus Kunststoff durch relative Drehung der zwei Halbschalen (30,31) um eine Achse, die das Filmscharnier (32) durchläuft, zusammengesetzt werden, zur Bildung des Luftkanals (5) aus Kunststoff.

6. Verfahren zur Herstellung eines Querträgers eines Armaturenbretts gemäß einem der vorhergehenden Ansprüche 1 bis 5, **dadurch gekennzeichnet, dass** das metallische Strukturelement (3) und der zur Anordnung in dem metallischen Strukturelement (3) vorgesehene Abschnitt des Luftkanals (5) komplementäre Markierungen (20,21,9,10) aufweisen, die eine Längsausrichtung und/oder eine Querausrichtung und/oder eine Winkelausrichtung des Luftkanals bezüglich einer der zwei metallischen Halbschalen (11,12) und/oder des metallischen Strukturelements (3) ermöglichen.

7. Querträger eines Armaturenbretts für ein Kraftfahrzeug (2), mit einem metallischen rohrförmigen Strukturelement (3), das mit den A-Säulen (4) des Kraftfahrzeugs (2) verbunden ist, und zumindest einen Luftkanal (5) aus Kunststoff zum Leiten von Luft in den Fahrgastraum (6) des Kraftfahrzeugs (2), welcher Luftkanal zumindest einen Abschnitt (5) umfaßt, der in dem metallischen Strukturelement (3) angeordnet ist, welches metallische Strukturelement (3) zwei miteinander verbundene metallische Halbschalen (11,12) umfaßt, **dadurch gekennzeichnet,**
- **dass** der Luftkanal (5) von den zwei Halbschalen (11,12) unabhängig ist und zumindest einen Abschnitt (5) umfaßt, der in dem metallischen Strukturelement (3) angeordnet ist, welcher einer elastischen Spannung zumindest in einer Querrichtung (25) unterliegt und zumindest an zwei gegenüberliegenden Punkten (23,24) der Innenfläche (18) des Strukturelements (3) durch die Wirkung der Reaktionskraft der elastischen Spannung abgeplattet ist.

8. Querträger eines Armaturenbretts für ein Kraftfahrzeug gemäß Anspruch 7, **dadurch gekennzeichnet, dass** die obere Halbschale (12) auf die untere Halbschale (11) aufgeklebt ist.

9. Querträger eines Armaturenbretts für ein Kraftfahrzeug gemäß Anspruch 7, **dadurch gekennzeichnet, dass** die obere Halbschale (12) an die untere Halbschale (11) angeschweisst ist.

10. Querträger eines Armaturenbretts für ein Kraftfahrzeug gemäß einem der Ansprüche 7 bis 9, **dadurch gekennzeichnet, dass** der Luftkanal (5) aus Kunststoff ein extrudierter/durch Blasformen hergestellter Kanal ist.

11. Querträger eines Armaturenbretts für ein Kraftfahrzeug gemäß einem der Ansprüche 7 bis 9, **dadurch gekennzeichnet, dass** der Luftkanal (5) aus Kunststoff zwei Halbschalen (30,31) aus Kunststoff umfaßt, die durch ein Filmscharnier (32) verbunden sind, das mit den Halbschalen (30,31) gemeinsam ausgeformt ist.

12. Querträger eines Armaturenbretts für ein Kraftfahrzeug gemäß einem der Ansprüche 7 bis 9, **dadurch gekennzeichnet, dass** das metallische Strukturelement (3) und der zur Anordnung in dem metallischen Strukturelement (3) vorgesehene Abschnitt des Luftkanals (5) komplementäre Markierungen (20,21;9,10) umfassen, die eine Längsausrichtung und/oder eine Querausrichtung und/oder eine Winkelausrichtung des Luftkanals (5) bezüglich den metallischen Halbschalen (11,12) und/oder dem metallischen Strukturelement (3) ermöglichen.

13. Kraftfahrzeug, umfassend eine Fahrgastzelle mit zwei A-Säulen (4) und einem Querträger eines Armaturenbretts (1) für das Kraftfahrzeug gemäß einem der Ansprüche 7 bis 12, mit Befestigungsmitteln (7), die mit komplementären Befestigungsmitteln an jeder A-Säule (4) zusammenwirken, zur Anbringung des Querträgers (1) an der Strukturzelle des Fahrzeugs zwischen den zwei A-Säulen (4).
